# EUROPEAN PATENT APPLICATION

(11) **EP 2 390 979 A1**
(43) Date of publication of application: **30.11.2011**
(21) Application number: 10164026.6
(22) Date of filing: 27.05.2010
(51) Int. Cl.: H02G 13/00, F03D 1/06

(54) **Charge initiated lightning protection system for a wind turbine blade and wind turbine blade with the charge initiated lighting protection system**

(71) Applicant: Siemens Aktiengesellschaft, 80333 München (DE)
(72) Inventor: Krug, Florian, 81243, München (DE); Lewke, Bastian, 7400, Herning (DK)

(57) **Abstract**

The invention provides a lightning protection system (2) for a wind turbine blade (1) via charge initiation (Charge Initiated Lightning Protection, CILP). The lightning protection system comprises at least one electric charge generator (20) for generating electric charge at a lightning receptor (21) of the wind turbine blade (1) such that an electrostatic field is generated at the lightning receptor (21) leading lightning current directly to the lightning receptor (21). Additionally the invention provides a wind turbine blade (1) having at least one such lightning protection system (2). The Charge Initiated Lightning Protection system is an efficient and easy way for protecting a wind turbine blade (1) from the effect of a lightning stroke. Just by rotating the wind turbine blade (1) electric charge can be concentrated at the lightning receptor (21) guiding the lightning current and avoiding the puncture of the blade surface of the wind turbine blade (1) as a result of a lightning stroke.

## Description

### BACKGROUND OF THE INVENTION

### 1. Field of the Invention

This invention relates to a lightning protection system for a wind turbine blade and a wind turbine blade with the lighting protection system.

### 2. Description of the Related Art

A blade material of a wind turbine blade, e.g. GFRP (Glass Fiber Reinforced Polymer), can be destroyed by a lightning stroke (e.g. composed by a leader and a return stroke). Therefore a wind turbine blade usually has a lightning protection system.

The lightning protection system consists of lightning receptors at a blade surface of the blade. Inside the blade there are conductors with electrically conducting material connected to the receptors. Via the conductors lightning current which is caused by a direct lightning stroke into the receptors can be diverted.

An area of the receptors is limited leading to a relatively small safe contact surface for the lightning stroke (few square centimeters) compared to the whole blade surface (e.g. 100 square meters). Due to that fact a probability for a direct lightning stroke into the lightning receptors is relatively low. As a consequence a puncture of the blade material caused by a lightning stroke into the blade surface cannot be avoided.

### SUMMARY OF THE INVENTION

It is an object of the invention to provide an efficient and reliable lightning protection system for a wind turbine blade. A puncture of the wind turbine blade caused by a direct lightning stroke into the he blade surface should be avoided.

Another object of the invention is the providing of a wind turbine blade with such an efficient and reliable lightning protection system.

These objects are achieved by the invention specified in the claims.

### BRIEF DESCRIPTION OF THE INVENTION

The invention provides a lightning protection system for a wind turbine blade via charge initiation (Charge Initiated Lightning Protection, CILP). The lightning protection system comprises at least one electric charge generator for generating electric charge at a lightning receptor of the wind turbine blade such that an electrostatic field is generated at the lightning receptor leading lightning current directly to the lightning receptor.

Additionally the invention provides a wind turbine blade having at least one such lightning protection system. Two or more such lightning protection systems are possible, too.

The charge generator has the function of localization and concentration of electric charge at the lightning receptor. By that a receptor surface charge of the lightning receptor is changed. This leads to an electrostatic field which gives a preferential path for the current of a lightning stroke via the lightning receptor and via the connectors inside the blade. As a result the probability of a damage of the blade surface of the wind turbine blade is reduced.

The charge can actively be produced or located. Therefore a special device for the separation of charge is used. For instance this device is a source of electric charge like a battery.

In a preferred embodiment the electric charge generator is developed such that the electric charge is passively generated. The electric charge is passively produced. No additional device for generating the charge is necessary.

In a further preferred embodiment the electric charge can be passively generated by rotating the wind turbine blade. For instance the blade material is a dielectric material like GFRP. The receptor material of the lightning receptor is a metal like copper. Due to free charge in the air the blade surface of the blade is charged. The blade surface charge of the blade surface causes the charging of the lightning receptor. For instance the blade surface is negatively charged. Negative charge is located on the blade surface of the blade. Consequently the receptor with the metal as receptor material is positively charged. This leads to a relatively high amount of positive charge at the receptor. An electrostatic field is built up which is leading the current of a lightning stoke directly to the lightning receptor.

Various designs of the lightning receptor are possible. E.g. the lightning receptor can be made of one metallic piece. Alternatively the lightning receptor consists of two or more pieces. E.g. the lighting receptor has an inner core with core material and at least one outer ring with ring material surrounding the inner ring. Two or more outer rings are possible, too. The core material and/or the ring material are electrically conductive material, e.g. metals. In the case both materials are conductive materials the inner core and the outer ring are preferably separated from each other by an inter layer with electrically insulating inter layer material. Between two adjacent outer rings with electrically conductive materials an interlayer with electrically insulating materials is arranged, too. But the interlayer can be leaved. The core and the surrounding ring and adjacent rings respectively are directly connected to each other.

In summary following advantages are connected with the invention:
- The Charge Initiated Lightning Protection system is an efficient and easy way for protecting a wind turbine blade from the effect of a lightning stroke.
- Just by rotating the wind turbine blade electric charge can be concentrated at the lightning receptor guiding the lightning current and avoiding the puncture of the blade surface of the wind turbine blade as a result of a lightning stroke.
- Additional devices for guiding the lightning current, e.g. metallic strips on the blade surface of the wind turbine blade are not necessary. Such additional devices could negatively affect a characteristic of the wind turbine blade, e.g. a mass of the wind turbine blade and a fluid flow of the wind turbine blade.

### BIEF DESCRIPTION OF THE DRAWING

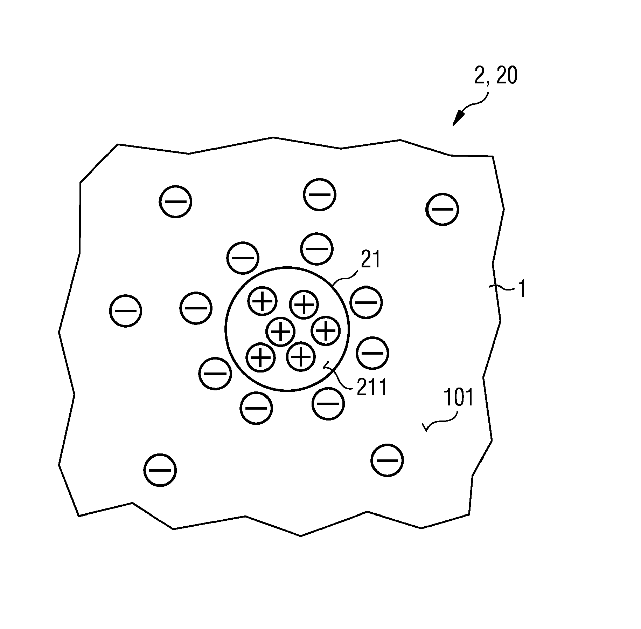

Further features and advantages of the invention are disclosed by the description of an exemplary embodiment with reference to the drawing. Figure 1 shows a detail of an example of a blade surface of a wind turbine blade equipped with the charge initiated lighting protection system.

### DETAILED DESCRIPTION OF THE INVENTION

Given is a wind turbine blade 1. The blade material of the wind turbine blade is GFRP.

The wind turbine blade 1 has a charge initiated lightning protection system 2. This lightning protection system 2 comprises a lighting receptor 21 which is integrated into the wind turbine blade 1. A receptor surface 211 of the lightning receptor 21 and a blade surface 101 of the wind turbine blade 1 are flushed with each other.

The lightning receptor 21 is made out of one piece and comprises a metal as receptor material. The lightning receptor 21 is connected to (not shown) inner conductors with conductive material of the blade 1.

In a not shown embodiment the receptor 21 comprises one inner core and one outer ring surrounding the inner core. The ring and the core comprise electrically conductive material. The ring and the core are separated from each other by an interlayer with electrically insulating material. This electrically insulating material is GFRP.

The lighting protection system 2 additionally comprises at least one electric charge generator 20. The electric charge generator 20 is developed such that the electric charge is generated passively: By rotating the wind turbine blade negative electric charge at the blade surface 101 of the wind turbine blade 1 is passively generated. Negative electric charge is concentrated at the blade surface 101. The negatively charging of the blade surface 101 of the wind turbine blade 1 causes a positively charging of the lightning receptor 21 and at the lightning receptor surface 211 of the lightning receptor 21 respectively. Positive charge is located at the receptor surface of the lightning receptor. Hence an electrostatic field is built up. This electrostatic field guides a lightning stroke. The lightning current of the lightning stroke can be diverted via the lightning receptor and via the connectors inside the blade. As a result the probability of a damage of the blade surface of the wind turbine blade by a lightning stroke is reduced.

## Claims

1. Lightning protection system (2) for a wind turbine blade (1), the lightning protection system comprising at least one electric charge generator (20) for generating electric charge at a lightning receptor of the wind turbine blade such that an electrostatic field is generated at the lightning receptor leading lightning directly to the lightning receptor.

2. Lightning protection system according claim 1, wherein the electric charge generator is developed such that the electric charge is generated passively.

3. Lightning protection system according claim 2, wherein the electric charge can be generated by rotating the wind turbine blade.

4. Wind turbine blade having at least one lightning protection system according to one of the claims 1 to 3.
